Europäisches Patentamt

European Patent Office

Office européen des brevets

(11) Veröffentlichungsnummer: **0 108 198**
**B1**

(12) **EUROPÄISCHE PATENTSCHRIFT**

(45) Veröffentlichungstag der Patentschrift: 07.06.89

(21) Anmeldenummer: **83107640.1**

(22) Anmeldetag: **03.08.83**

(51) Int. Cl.⁴: **C 01 B 3/36, C 10 J 3/46**

(54) Verfahren zum Betreiben eines Reaktors zur Erzeugung von Synthesegas und Vorrichtung zur Durchführung des Verfahrens.

(30) Priorität: **08.10.82 DE 3237334**

(43) Veröffentlichungstag der Anmeldung:
**16.05.84 Patentblatt 84/20**

(45) Bekanntmachung des Hinweises auf die
Patenterteilung:
**07.06.89 Patentblatt 89/23**

(84) Benannte Vertragsstaaten:
**BE FR GB IT NL**

(56) Entgegenhaltungen:
**DE-A-2 246 885**
**DE-C- 905 974**
**GB-A-2 044 795**
**US-A-1 800 856**
**US-A-4 011 058**

(73) Patentinhaber: **MAN GUTEHOFFNUNGSHÜTTE GMBH**
**Bahnhofstrasse, 66 Postfach 11 02 40**
**D-4200 Oberhausen 11 (DE)**

(72) Erfinder: **Knop, Klaus, Dr.-Ing.**
**Eckesdyck 11**
**D-4170 Geldern-Hartefeld (DE)**
Erfinder: **Heinrich, Peter, Dr.-Ing.**
**Reinersstrasse 36**
**D-4200 Oberhausen 11 (DE)**

Courier Press, Leamington Spa, England.

# EP 0 108 198 B1

**Beschreibung**

Die Erfindung betrifft ein Verfahren zum Betrieben eines Reaktors zur Erzeugung von Synthesegas mit nachgeschalteter Gasaufbereitung zur Wiederverwendung eines Teilstromes im Reaktor, bei dem ein Teil der Abwärme des Reaktors nach der Gasaufbereitung dem Kreislaufgas wieder zugeführt wird nach der nicht vorveröffentlichen EP—A—0 097 803 (DE—A—32 23 702).

Bei dem Verfahren zur Herstellung von Gasen mit einem bestimmten $CO$—$H_2$-Verhältnis nach der DE—C—905 974 verläßt der größte Teil des Gases den Erzeduktionsschacht und wird zum Zwecke der teilweisen Befreiung von Wasserstoff gekühlt, getrocknet und dann wieder erhitzt. Dieses Gas gelangt sodann in einen Rekarburator, in den zur Vergasung Öl zugeführt wird. Das den Rekarburator verlassene Gas wird als Reduktionsgas in den Erzreduktionsschacht eingeführt.

Zur Erhöhung der Wirtschaftlichkeit wird bei dem Verfahren gemäß der EP—A—0 097 803 das Kreislaufgas vor Wiedereintritt in den Synthesegas-Reaktor durch die Abgaswärme des Reaktors aufgeheitzt. Der Wärmeaustausch zwischen heißem Synthesegas und kaltem Kreislaufgas erfolgt dabei über Abhitzewärmetauscher.

Es hat sich gezeigt, daß das Material dieses Wärmeaustauschers dem heißen und korrosiven Synthesegas auf die Dauer nicht standhält. Zur Materialbelastung trägt auch der im Synthesegas mitgeführte Flugstaub bei.

Es ist Aufgabe der Erfindung, das Verfahren gemäß der EP—A—0 097 803 so zu verändern, daß die vorwähntenten Nachteile vermieden werden.

Diese Aufgabe wird erfindungsgemäß dadurch gelöst, daß bei dem Verfahren der Wärmeaustausch zwischen dem aus dem Reaktor austretenden heißen Synthesegas und dem in den Reaktor eintretenden kalten Kreislaufgas regenerativ erfolgt.

Vorteilhaft kann das Verfahren derart durchgeführt werden, daß das im Regenerator abgekühlte Synthesegas in einem Dampferzeuger weiter abgekühlt wird, von Flugasche befreit, einer Hochtemperatur-Konvertierung und Gaswäsche unterworfen wird, anschließend aufgeheizt einem Reduktionsreaktor zur teilweisen Oxidation zugeführt wird, nach Verlassen des Reduktionsreaktors durch den Regenerator aufgeheizt und zusammen mit vorerhitztem Sauerstoff und kohlenstoffhaltigem Brenn-material dem Reaktor wieder zugeführt wird.

Alternativ zu diser Verfahrensführung kann aus dem Kreislauf des Synthesegases nach der Gaswäsche ein Teilstrom ausgeschleust werden, welcher einer Niedertemperatur-Konvertierung und erneuter Gaswäsche unterworfen wird und als Frischgas bei weiteren Prozessen zur Verfügung steht.

Zugunsten einer höheren Wirtschaftlichkeit wird bei dem Verfahren zumindest ein Teil der im Dampferzeuger gebildeten Dampfmenge zur Sauerstoffgewinnung für den Reaktor eingesetzt.

Weitere vorteilhafte Ausgestaltungen des erfindungsgemäßen Verfahrens sind in den Unteransprüchen 5 bis 9 angegeben.

Die Vorrichtung zur Durchführung des erfindungsgemäßen Verfahrens weist vorteilhaft einen Regenerator zum Wärmeaustausch zwischen rückgeführtem Kreislaufgas und aus dem Reaktor austretenden Synthesegas auf.

Der Regenerator kann im Gegensatz zu üblichen Metallröhren-Wärmeaustauschern mit hohen Temperaturen belasten werden, die im Abgasstrom des Synthesegasreaktors auftreten. Weiterhin ist er unempfindlich gegenüber den korrosiven Einflüssen und dem Staubgehalt des Synthesegases.

Im folgenden werden zwei Ausführungsbeispiele der Erfindung anhand von Schaltschemata näher beschrieben. Es zeigen:

Fig. 1 das Blockdiagramm einer Anlage zur Erzeugung von Synthesegas zur Verwendung in einem Redkutionsreaktor und

Fig. 2 das Blockdiagramm der Anlage gemäß Fig. 1 mit zusätzlicher Frischgaserzeugung.

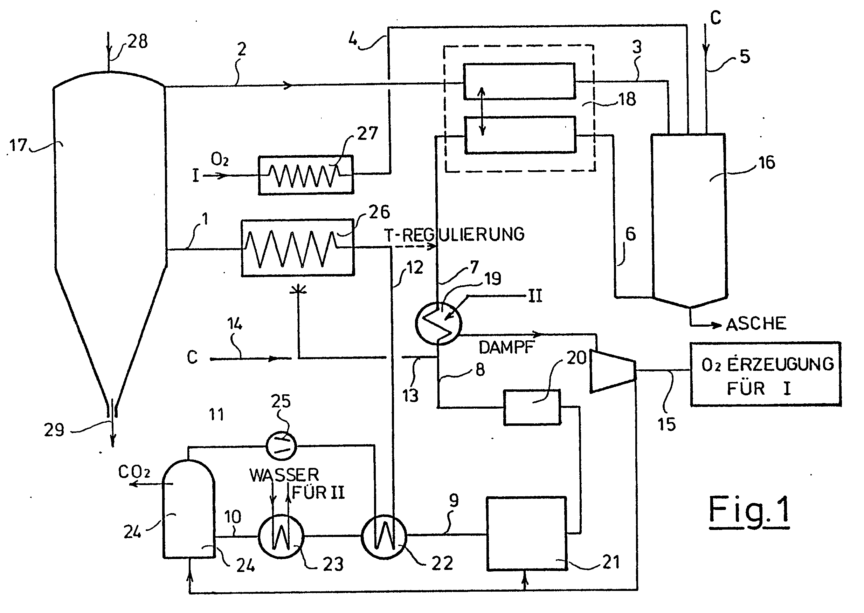

Die Zusammensetzungen der Gase in den gekennzeichneten Teilen der Vorrichtung gemäß Fig. 1 sind aus der Tabelle I ersichtlich.

Wie Fig. 1 zeigt, wird bei dem erfindungsgemäßen Verfahren das in einem Reaktor 16 erzeugte Synthesegas nach einer Gasaufbereitung in einen Reduktionsreaktor 17 geleitet und von dort im Kreislauf wieder dem Reaktor 16 zugeführt.

Der Synthesegasreaktor 16 wird über die Leitung 5 mit Kohlenstoff in Form von Kohlenstaub beschickt. Der Kohlenstoff kann aber auch in Form von Gas oder Öl zugeführt werden. In den Reaktor 16 wird weiterhin auf 400° Celcius aufgeheizter Sauerstoff über die Leitung 4 und das aus dem Reduktionsreaktor 17 austretende Gas über die Leitungen 2 und 3, das in einem Regenerator 18 auf 1.100° Celsius (max. 1.200° Celsius) aufgeheizt wird, eingeleitet. Zur Aufheizung des Regenerators 18 dient ein Teil der fühlbaren Wärme des aus dem Reaktor 16 über die Leitung 6 austretenden Synthesegases. Ein für das Verfahren geeigneter Regenerator, der einem heißen Gasstrom Wärme entzieht, speichert und schießlich auf einen anderen Gasstrom überträgt, ist dem Fachmann aus der Hochofen-Technik und Glasherstellung bekannt und braucht nicht besonders beschrieben zu werden.

Im Vergasungsreaktor 16 erfolgt die Umsetzung im Temperaturbereich zwischen 1.300° Celsius und 1.500° Celsius. Die bei der Umsetzung anfallende Asche wird unten aus dem Reaktor abgezogen. Den Reaktor 16 verläßt das Synthesegas über die Leitung 6 mit einer Temperatur zwischen 1.200° Celsius und 1.300° Celsius und einer Zusammensetzung, wie sie aus der Tablelle I, Spalte 6, ersichtlich ist. Nach

2

Durchlaufen des Regenerators 18, aus dem es über die Leitung 7 mit einer mittleren Temperatur von 750° Celsius austritt, wird das Synthesegas in einem Wärmeaustauscher 19, der mit einem Dampferzeuger gekoppelt ist, auf 300° Celsius abgekühlt. Der erzeugte Dampf wird mittels eines turbinenangetriebenen Kompressors zur Gewinnung des im Verfahren angesetzten Sauerstoffs verwendet (Leitung 15). Überschußdampf kann zur Eigenbedarfsstromdeckung eingesetzt werden. Der bei der Sauerstoffgewinnung angallende Stickstoff wird als Spülgas im Rahmen der $CO_2$-Wäsche des Synthesegases eingesetzt.

Ein Teil des Synthesegasstromes wird nach Durchlaufen des Wärmeausauschers 19 über die Leitung 13 abgezweigt und dient zusammen mit über die Leitung 14 zugesetztem Kohlenstaub als Brennmaterial in einem Abgaserhitzer 26. Der Abgaserhitzer 26 heizt das in den Reduktionsreaktor 17 über die Leitung 1 einströmende Gas auf eine Temperatur von ca. 920° Celsius auf.

Das nicht im Abgaserhitzer 26 verwendete Gas (Leitung 8) wird nach Durchlaufen eines Filters 20 oder anderer zur Entfernung von Flugasche geeigneter Vorrichtungsteile einem Hochtemperatur-Konverter 21 zugeführt, mit welchem das günstige $H_2$/CO-Verhältnis eingestellt werden kann. Die Gaszusammensetzung in der Leitung 9 nach Durchlauf durch den Konverter 21 ergibt sich aus Spalte 9, Tabelle I.

Das im Hochtemperatur-Konverter 21 aufgeheizte Gas (Leitung 9) wird vor Eintritt (Leitung 10) in eine $CO_2$/$H_2$ S-Wäsche 24 in Wärmeaustauschern 22 und 23 abgekühlt. Der Wärmeaustauscher 23 dient zur Aufheizung von Kesselspeisewasser, das in den Wärmeaustauscher 19 eintritt. Nach der $CO_2$/$H_2$ S-Wäsche wird das Gas über die Leitung 11 einem Verdichter 25 zugeführt. Der Verdichter 25 speist den Wärmeaustauscher 22, von wo das Gas vorgewärmt über die Leitung 12 dem Abgaserhitzer 26 zugeführt wird. Im Abgaserhitzer 26 wird das Gas 1, wie bereits beschrieben, aufgeheizt und über die Leitung 1 mit einer Zusammensetzung gemäß Spalte 1, Tabelle I, dem Reduktionsreaktor 17 zugeführt. Die Abgasenergie des Abgaserhitzers 26 reicht aus, um zusätzlich noch den Sauerstoff für den Betrieb des Reaktors 16 in einem Sauerstoff-Vorwärmer 27 aufzuheizen.

Im Reduktionsreaktor 17, der bei 28 mit Erz beschickt wird und dem bei 29 im Durchlaufverfahren das reduzierte Produkt entnommen wird, erfolgt eine teilweise Oxidation des Reduktionsgases, das den Reaktor 17 über die Leitung 2 mit einer Zusammensetzung gemäß Spalte 2, Tabelle I, verläßt. Vom Redktionsreaktor 17 wird das Gas uber die Leitung 2 dem Regenerator 18 zur Aufheizung zugeführt und tritt anschließend über die Leitung 3 mit einer Temperatur von ca. 1.100° Celsius in den Reaktor 16 ein.

Zur Tempraturregulierung des aus dem Regenerator 18 austretenden heißen Synthesegases kann kaltes Reduktionsgas aus der Leitung 12 in die Leitung 7 eingespeist werden, wie es in Fig. 1 gestrichelt angedeutet ist.

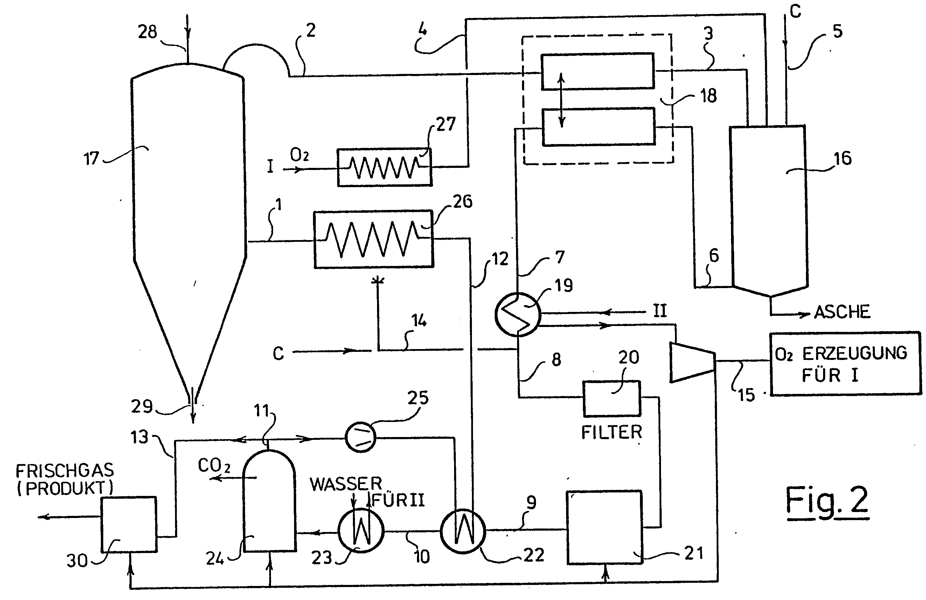

Gemäß Fig. 2 wird der beim Verfahren erzeugte Überschuß an Synthesegas nach der $CO_2$/$H_2$ S-Wäsche 24 aus dem Kreislauf über die Leitung 13 ausageschleust und durchläuft einen Niedertemperatur-Konverter 30 und eine anschließende $CO_2$-Wäsche. In der $CO_2$-Wäsche wird, wie schon beschrieben, der bei der Sauerstoffgewinnung anfallende Stickstoff als Spülgas eingesetzt. Das aufbereitete Gas kann als Frischgas z.B. bei der Ammoniak-Erzeugung oder als Heizgas eingesetzt werden.

Analysen und Mengen

## TABELLE I

| Ort | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| $H_2$ (Vol. %) | 54,72 | 36,39 | 36,39 | | | 31,40 | 31,40 | 31,40 | 42,56 | 42,56 | 54,72 | 54,72 | 54,72 | 31,40 | |
| Co (Vol. %) | 36,60 | 23,28 | 23,28 | | | 48,53 | 48,53 | 48,53 | 28,46 | 28,46 | 36,60 | 36,60 | 36,60 | 48,53 | |
| $Co_2$ (Vol. %) | 3,00 | 15,82 | 15,82 | | | 6,31 | 6,31 | 6,31 | 20,26 | 20,26 | 3,00 | 3,00 | 3,00 | 6,31 | |
| $H_2O$ (Vol. %) | 5,00 | 22,96 | 22,96 | | | 13,17 | 13,17 | 13,17 | 8,19 | 8,19 | 5,00 | 5,00 | 5,00 | 13,17 | |
| $CH_4$ (Vol. %) | 0,00 | 0,72 | 0,72 | | | 0,00 | 0,00 | 0,00 | 0,00 | 0,00 | 0,00 | 0,00 | 0,00 | 0,00 | |
| $N_2$ (Vol. %) | 0,69 | 0,82 | 0,82 | | | 0,60 | 0,60 | 0,60 | 0,53 | 0,53 | 0,69 | 0,69 | 0,69 | 0,60 | |
| $O_2$ (kg) | — | — | — | 304 | — | — | — | — | — | — | — | — | — | — | |
| C (kg) | — | — | — | — | 340 | — | — | — | — | — | — | — | — | — | |
| $\Sigma C$ (kg) | 390,7 | 387,8 | 387,8 | | 340 | 727,8 | 727,8 | 710,2 | 710,2 | 710,2 | 448,7 | — | 57,9 | 17,6 | |
| $\Sigma H_2$ (kg) | 97,8 | 98,2 | 98,2 | | | 98,2 | 98,2 | 95,8 | 122,8 | 122,8 | | | | 2,4 | |
| $\Sigma O$ (kg) | | | | 304 | | | | | | | | | | | |
| $\Sigma N$ (kg) | | | | | | | | | | | | | | | |
| T (°C) | 920 | 475 | 1100 | 400 | 20 | 1270 | 795 | 300 | 400 | 160 | | 400° | | | |
| P (bar) | 6 | 5,5 | 5,2 | 5,5 | 5,5 | 5,0 | 4,7 | | | | | | | | |
| M ($Nm^3$) | 1841 | 1815 | 1815 | 213 | 634 | 2476 | 2476 | 2476 2416 | 2718 | 2718 | 2114 | 1841 | 273 | 60 | 220 |

EP 0 108 198 B1

# EP 0 108 198 B1

**Patentansprüche**

1. Verfahren zum Betreiben eines Reaktors zur Erzeugung von Synthesegas mit nachgeschalteter Gasaufbereitung zur Wiederverwendung eines Teilstromes im Reaktor, bei dem ein Teil der Abwärme des Reaktors nach der Gasaufbereitung dem Kreislaufgas wieder zugeführt wird, dadurch gekennzeichnet, daß der Wärmeaustausch zwischen dem aus dem Reaktor (16) austretenden heißen Synthesegas und dem in den Reaktor (16) eintretenden kalten Kreislaufgas regenerativ erfolgt.

2. Verfahren nach Anspruch 1, dadurch gekennzeichnet, daß das im Regenerator (18) abgekühlte Synthesegas in einem Dampferzeuger (19) weiter abgekühlt wird, von Flugasche befreit, einer Hochtemperatur-Konvertierung und einer Gaswäsche unterworfen wird, anschließend aufgeheizt einem Reduktionsreaktor (17) zur teilweisen Oxidation zugeführt wird, nach Verlassen des Reduktionsreaktors (17) durch den Regenerator (18) aufgeheizt und zusammen mit vorerhitztem Sauerstoff und kohlenstoffhaltigem Brennmaterial dem Reaktor (16) wieder zugeführt wird.

3. Verfahren nach Anspruch 1 oder 2, dadurch gekennzeichnet, daß ein Teilstrom des Synthesegases nach der Gaswäsche einer Niedertemperatur-Konvertierung und erneuter Gaswäsche unterworfen wird und als Frischgas zur Verwendung in weiteren Prozessen den Kreislauf verläßt.

4. Verfahren nach den Anspruchen 1 bis 3, dadurch gekennzeichnet, daß zumindest ein Teil der im Dampferzeuger (19) gebildeten Dampfmenge zur Sauerstoffgewinnung für den Reaktor (16) angesetzt wird.

5. Verfahren nach den Ansprüchen 1 bis 4, dadurch gekennzeichnet, daß der bei der Sauerstofferzeugung anfallende Stickstoff im Rahmen der $CO_2$-Wäsche als Spülgas benutzt wird.

6. Verfahren nach den Ansprüchen 1 bis 5, dadurch gekennzeichnet, daß ein Teil des Kreislaufgases zusammen mit Kohlenstaub zur Aufheizung des in den Reduktionsreaktor (17) eintretenden Gasstromes und des Sauerstoffstromes für den Reaktor (16) verwendet wird.

7. Verfahren nach den Ansprüchen 1 bis 6, dadurch gekennzeichnet, daß zur Temperaturregulierung in den aus dem Regenerator (18) austretenden Synthesegasstrom kaltes Reduktionsgas eingeleitet wird.

8. Verfahren nach den Ansprüchen 1 bis 7, dadurch gekennzeichnet, daß das auf dem Reaktor (16) austretende Synthesegas folgende Zusammensetzung ausweist:

| | |
|---|---|
| Wasserstoff | 27—36% |
| Kohlenmonoxyd | 44—52% |
| Kohlendioxyd | 5,6—6,9% |
| Wasser | 11,6—14,7% |
| Methan | 0 —0,1% |
| Stickstoff | 0,4—0,8% |

wobei die Summe der Bestandteile 100% ergibt.

9. Verfahren nach den Ansprüchen 1 bis 8, dadurch gekennzeichnet, daß durch die Aufbereitung des Synthesegases ein Reduktionsgas folgender Zusammensetzung hergestellt wird:

| | |
|---|---|
| Wasserstoff | 49—60% |
| Kohlenmonoxyd | 33—40% |
| Kohlendioxyd | 2,7—3,3% |
| Wasser | 4,5—5,5% |
| Methan | 0 —0,1% |
| Stickstoff | 0,6—0,8% |

wobei die Summe der Bestandteile 100% ergibt.

10. Vorrichtung zur Durchführung des Verfahrens nach den Ansprüchen 1 bis 9, bestehend aus einem Reduktionsreaktor (17), einer Vorrichtung (2) zur Rückführung des Kreislaufgases vom Reduktionsreaktor (17) zu einem Synthesegasreaktor (16), dem Reaktor (16) zur Synthesegaserzeugung, einer Vorrichtung (5) zur Beimischung von kohlenstoffhaltigem Brennmaterial, einer Vorrichtung (4) zur Einleitung von Sauerstoff zu dem Gemisch aus Kreislaufgas und Brennmaterial, Vorrichtung (20, 21, 24, 30) zur Gasaufbereitung, Gaserhitzer (22, 26, 27) und Dampferzeugung (19, 23) mit angeschlossener Sauerstoffgewinnung, gekennzeichnet durch einen Regenerator (18) zum Wärmeaustausch zwischen rückgeführtem Kreislaufgas und aus dem Reaktor (16) austretenden Synthesegas.

**Revendications**

1. Procédé pour exploiter un réacteur en vue de produire du gaz de synthèse, avec une préparation de gaz branchée à la suite pour réutiliser un courant partiel dans le réacteur, procédé dans lequel une partie de la chaleur perdue du réacteur est ramenée au gaz de recyclage après la préparation de gaz, procédé caractérisé en ce que l'échange thermique entre le gaz de synthèse sortant chaud du réacteur et le gaz de recyclage froid etrant dans le réacteur s'effectue avec régénération.

2. Procédé selon la revendication 1, caractérisé en ce que le gaz de synthèse refroidi dans le .régénérateur (18) est à nouveau refroidi dans un générateur de vapeur (19), débarrassé des cendres en suspension, soumis à une conversion à haute température et à un lavage, et amené ensuite, réchauffé, à un réacteur de réduction (17) pour oxydation partielle, puis après avoir quitté le réacteur de réduction (17), il est réchauffé par le régénérateur (18) et ramené au réacteur (16) en même temps que de l'oxygène préchauffé et un combustible contenant du carbone.

3. Procédé selon la revendication 1 ou 2, caractérisé en ce qu'un courant partiel du gaz de synthèse est soumis après le lavage à une conversion à basse températur et à un nouveau lavage, puis il quitte le circuit en tant que gaz frais destiné à être utilisé dans d'autres processus.

4. Procédé selon les revendications 1 à 3, caractérisé en ce qu'au moins une partie de la quantité de vapeur produite dans le générateur de vapeur (19) est mise en oeuvre pour obtenir l'oxygène pour le réacteur (16).

5. Procédé selon les revendications 1 à 4, caractérisé en ce que l'azote obtenu lors de la production de l'oxygène est utilisé comme gaz de lavage dans le cadre du lavage de $CO_2$.

6. Procédé selon les revendications 1 à 5, caractérisé en ce qu'une partie du gaz de recyclage est utilisée, en même temps que de la poussière de charbon, pour le réchauffage du courant de gaz entrant dans le réacteur de réduction (17) est du courant d'oxygène pour le réacteur (16).

7. Procédé selon les revendications 1 à 6, caractérisé en ce que du gaz de réduction froid est introduit, pour assurer la régulation de température, dans le courant de gaz de synthèse sortant du régénérateur (18).

8. Procédé selon les revendications 1 à 7, caractérisé en ce que le gaz de synthèse sortant du réacteur (16) a la composition suivante:

| | |
|---|---|
| Hydrogène | 27—36% |
| Monoxyde de carbone | 44—52% |
| Bioxyde de carbone | 5,6—6,9% |
| Eau | 11,6—14,7% |
| Méthane | 0 —0,1% |
| Azote | 0,4—0,8% |

la some des constituants étant égale à 100%.

9. Procédé selon les revendications 1 à 8, caractérisé en ce que, du fait de la préparation du gaz de synthèse, un gaz de réduction de la composition suivante est obtenu:

| | |
|---|---|
| Hydrogène | 49—60% |
| Monoxyde de carbone | 33—40% |
| Bioxyde de carbone | 2,7—3,3% |
| Eau | 4,5—5,5% |
| Méthane | 0 —0,1% |
| Azote | 0,6—0,8% |

la somme des constituants étant égale à 100%.

10. Dispositif pour la mise en oeuvre du procédé selon les revendications 1 à 9, dispositif constitué d'un réacteur de réduction (17), de moyens (2) pour ramener le gaz de recyclage du réacteur de réduction (17) à un réacteur (16) de gaz de synthèse, du réacteur (16) pour la production du gaz de synthèse, de moyens (5) pour ajouter un combustible contenant du carbone, de moyens (4) pour introduire de l'oxygène dans le mélange de gaz de recyclage et de combustible, de moyens (20, 21, 24, 30) pour la préparation du gaz, d'un rechauffeur de gaz (22, 26. 27) et de moyens de production de vapeur (19, 23) auxquels se raccordent des moyens de production d'oxygène, dispositif caractérisé en ce qu'il comporte un régénérateur (18) pour l'échange thermique entre le gaz de recyclage en retour et le gaz de synthèse sortant du réacteur (16).

# EP 0 108 198 B1

**Claims**

1. Process for operating a reactor for the generation of synthesis gas with downstream gas processing for re-use of a part stream in the reactor, a part of the waste heat from the reactor being returned again to the circulating gas after gas processing, characterized in that the heat exchange between the hot synthesis gas leaving the reactor (16) and the cold circulating gas entering the reactor (16) takes place regeneratively.

2. Process according to Claim 1, characterized in that the synthesis gas cooled in the regenerator (18) is further cooled in a steam generator (19), freed from fly ash, subject to a high-temperature shift conversion and to gas scrubbing, is then heated up and fed to a reduction reactor (17) for partial oxidation, heated up by the regenerator (18) after leaving the reduction reactor (17) and, together with preheated oxygen and carbonaceous fuel material, fed back to the reactor (16).

3. Process according to Claim 1 or 2, characterized in that a part stream of the synthesis gas is, after gas scrubbing, subjected to a low-temperature shift conversion and further gas scrubbing and leaves the circulation as fresh gas for use in further processes.

4. Process according to Claims 1 to 3, characterized in that at least a part of the quantity of steam formed in the steam generator (19) is used for producing the oxygen for the reactor (16).

5. Process according to Claims 1 to 4, characterized in that the nitrogen arising in the production of oxygen is used as flushing gas within $CO_2$ scrubbing.

6. Process according to Claims 1 to 5, characterized in that a part of the circulating gas is used, together with coal dust, for heating up the gas stream, entering the reduction reactor (17), and the oxygen stream for the reactor (16).

7. Process according to Claims 1 to 6, characterized in that cold reduction gas is introduced for controlling the temperature in the synthesis gas stream leaving the regenerator (18).

8. Process according to Claims 1 to 7, characterized in that the synthesis gas leaving the rector (16) has the following composition:

| | |
|---|---|
| Hydrogen | 27—36% |
| Carbon monoxide | 44—52% |
| Carbon dioxide | 5.6—6.9% |
| Water | 11.6—14.7% |
| Methane | 0 —0.1% |
| Nitrogen | 0.4—0.8% |

the total of the constituents giving 100%.

9. Process according to Claims 1 to 8, characterized in that a reduction gas of the following composition is produced by processing of the synthesis gas:

| | |
|---|---|
| Hydrogen | 49—60% |
| Carbon monoxide | 33—40% |
| Carbon dioxide | 2.7—3.3% |
| Water | 4.5—5.5% |
| Methane | 0 —0.1% |
| Nitrogen | 0.6—0.8% |

the total of the constituents giving 100%.

10. Equipment for carrying out the process according to Claims 1 to 9, comprising a reduction reactor (17), a device (2) for recycling the circulating gas from the reduction reactor (17) to a synthesis gas reactor (16), the reactor (16) for synthesis gas generation, a device (5) for admixing carbonaceous fuel material, a device (4) for introducing oxygen into the mixture of circulating gas and fuel material, devices (20, 21, 24, 30) for gas processing, gas heaters (22, 26, 27) and steam generation (19, 23) connected to oxygen production, characterized by a regenerator (18) for heat exchange between recycled circulating gas and synthesis gas leaving the reactor (16).

7

Fig.1

Fig.2